# EUROPÄISCHE PATENTANMELDUNG

(11) **EP 3 528 007 A1**
(43) Veröffentlichungstag der Anmeldung: **21.08.2019**
(21) Anmeldenummer: 18210732.6
(22) Anmeldetag: 06.12.2018
(51) Int. Cl.: G01S 19/07, G01S 19/41, G01S 19/34

(54) **VERFAHREN UND VORRICHTUNG ZUM BEREITSTELLEN VON ROH-KORREKTURDATEN ZUR KORREKTUR ATMOSPHÄRISCHER STÖRUNGEN ZUR SATELLITENNAVIGATION SOWIE VERFAHREN UND VORRICHTUNG ZUM BESTIMMEN VON KORREKTURDATEN ZUR KORREKTUR ATMOSPHÄRISCHER STÖRUNGEN ZUR SATELLITENNAVIGATION**

(30) Priorität: 14.02.2018 DE 102018202225
(71) Anmelder: Robert Bosch GmbH, 70442 Stuttgart (DE)
(72) Erfinder: Arnold, Jan-Christian, 71640 Ludwigsburg (DE); Lentz, Nikolas, 74360 Ilsfeld (DE)

(57) **Zusammenfassung**

Die Erfindung betrifft ein Verfahren zum Bereitstellen von Roh-Korrekturdaten (135) zur Korrektur atmosphärischer Störungen zur Satellitennavigation. Das Verfahren weist einen Schritt des Überprüfens, ob ein mobiles Satellitenempfangsgerät (120) zur Satellitennavigation sich in einem unbewegten Zustand befindet, unter Verwendung zumindest eines Sensorsignals auf. Hierbei repräsentiert das Sensorsignal eine von einem Bewegungszustand des mobilen Satellitenempfangsgeräts (120) abhängige Messgröße. Auch weist das Verfahren einen Schritt des Auswertens mindestens eines zwischen zumindest einem Satelliten (110) und dem mobilen Satellitenempfangsgerät (120) in dem unbewegten Zustand übertragenen Satellitensignals (115) hinsichtlich einer von atmosphärischen Störungen abhängigen Signaleigenschaft auf, um die Roh-Korrekturdaten (135) zu erzeugen. Dabei repräsentieren die Roh-Korrekturdaten (135) eine Information über die atmosphärischen Störungen.

## Beschreibung

### Stand der Technik

Die Erfindung geht von Verfahren oder einer Vorrichtung nach Gattung der unabhängigen Ansprüche aus. Gegenstand der vorliegenden Erfindung ist auch ein Computerprogramm.

Insbesondere für hochautomatisiertes Fahren und andere Anwendungen ist eine genaue Positionsbestimmung bedeutsam. Zur Korrektur von Positionierungssignalen in der Satellitennavigation können beispielsweise Abweichungen in der Atmosphäre der Erde berücksichtigt werden.

### Offenbarung der Erfindung

Vor diesem Hintergrund werden mit dem hier vorgestellten Ansatz Verfahren, weiterhin eine Vorrichtung, welche eines dieser Verfahren verwendet, sowie schließlich ein entsprechendes Computerprogramm gemäß den Hauptansprüchen vorgestellt. Durch die in den abhängigen Ansprüchen aufgeführten Maßnahmen sind vorteilhafte Weiterbildungen und Verbesserungen der im unabhängigen Anspruch angegebenen Vorrichtung möglich.

Gemäß Ausführungsformen kann insbesondere eine Ermittlung von Korrekturdaten für ein differentielles Navigationssystem durch Verwendung von Navigationsendgeräten als Informationsquelle bezüglich Störungen ermöglicht werden, die durch Laufzeitänderungen in der Atmosphäre der Erde, insbesondere in der Ionosphäre und Troposphäre, entstehen können. Informationen aus dieser Informationsquelle können beispielsweise auf einem Server bzw. in der sogenannten Datenwolke oder Cloud zu Korrekturdaten verarbeitet werden. Auch kann somit beispielsweise eine differentielle Positionsbestimmung für Fahrzeuge oder dergleichen mittels Referenzstationen in Gestalt von in einem unbewegten Zustand befindlichen, mobilen Satellitenempfangsgeräten ermöglicht werden. Anders ausgedrückt können Korrekturdaten für die Satellitennavigation zusätzlich oder alternativ zu fest stehenden Referenzstationen durch Navigationsendgeräte ermittelt werden, die Informationen sammeln können, um eine Ermittlung von Korrekturdaten auf einem Server bzw. in der Cloud zu ermöglichen. Ein Einsatzgebiet solcher Korrekturdaten kann insbesondere auf dem Gebiet des hochautomatisierten Fahrens bzw. eines Sensors liegen, der eine Position eines Fahrzeugs anhand von Satellitennavigation bzw. satellitengestützte Positionsbestimmung ermitteln kann. Eine Ermittlung von Daten zur Berechnung eines Korrektursignals kann beispielsweise in einem Navigationsendgerät bzw. Satellitenempfangsgerät zum Einsatz kommen, welches zum Beispiel einen Beschleunigungssensor, ein Gyroskop oder dergleichen aufweist.

Vorteilhafterweise kann gemäß Ausführungsformen insbesondere eine besonders genaue Positionsbestimmung über Navigationssatelliten (GNSS, Global Navigation Satellite System, dt. globales ziviles Satellitennavigationssystem) für hochautomatisiertes Fahren und andere Anwendungen ermöglicht werden. Beispielsweise können gemäß Ausführungsformen Ungenauigkeiten, die zum Beispiel durch Signallaufzeitänderungen in der Ionosphäre und Troposphäre entstehen, korrigiert werden. Um eine Genauigkeit bei einer Positionsbestimmung zu verbessern, können bei differentiellen Satellitennavigationssystemen Korrekturdaten eingesetzt werden, um beispielsweise eine zentimetergenaue Positionsbestimmung zu ermöglichen. Zur Ermittlung der Korrekturdaten können zusätzlich oder alternativ zu fest stehenden Referenzstationen mobile Satellitenempfangsgeräte in einem stationären Zustand genutzt werden, die eine Ermittlung von Korrekturdaten anhand einer bekannten und unveränderlichen Position ermöglichen können. Insbesondere kann dadurch eine Anzahl von Referenzstationen erhöht werden. Beispielsweise könnte ein in einem Fahrzeug angeordnetes Satellitenempfangsgerät sowohl zur Positionsbestimmung eingesetzt werden als auch im unbewegten Zustand als eine Referenzstation fungieren. Eine Fahrzeugflotte kann sich somit insbesondere ein neues Gebiet ohne Abdeckung mit Referenzstationen erschließen. Es kann beispielsweise ermöglicht werden, dass keine oder weniger oder weniger neue an einem Ort fest installierte Referenzstationen zu betreiben sind. Durch eine Mehrzahl von als Referenzstationen fungierenden Satellitenempfangsgeräten kann ein Korrekturdienst für Satellitennavigation kostengünstig betrieben werden, wobei eine Genauigkeit durch eine Erhöhung von Anzahl und Dichte der als Referenzstationen fungierenden Endgeräte werden kann. Die Korrekturdaten können beispielsweise über eine Funkübertragung Navigationsgeräten zur Verfügung gestellt werden, die daraus in Verbindung mit empfangenen Satellitensignalen eine genauere Position bestimmen können.

Es wird ein Verfahren zum Bereitstellen von Roh-Korrekturdaten zur Korrektur atmosphärischer Störungen zur Satellitennavigation vorgestellt, wobei das Verfahren folgende Schritte aufweist:
Überprüfen, ob ein mobiles Satellitenempfangsgerät zur Satellitennavigation sich in einem unbewegten Zustand befindet, unter Verwendung zumindest eines Sensorsignals, wobei das Sensorsignal eine von einem Bewegungszustand des mobilen Satellitenempfangsgeräts abhängige Messgröße repräsentiert; und
Auswerten mindestens eines zwischen zumindest einem Satelliten und dem mobilen Satellitenempfangsgerät in dem unbewegten Zustand übertragenen Satellitensignals hinsichtlich einer von atmosphärischen Störungen abhängigen Signaleigenschaft, um die Roh-Korrekturdaten zu erzeugen, wobei die Roh-Korrekturdaten eine Information über die atmosphärischen Störungen repräsentieren.

Dieses Verfahren kann beispielsweise in Software oder Hardware oder in einer Mischform aus Software und Hardware beispielsweise in einem Steuergerät oder einer Vorrichtung implementiert sein. Die Roh-Korrekturdaten können verwendet werden, um Korrekturdaten zur Korrektur von Satellitensignalen im Hinblick auf Störungen der Atmosphäre zu bestimmen. Das mobile Satellitenempfangsgerät kann ausgebildet sein, um unter Verwendung mindestens eines Satellitensignals eine Positionsbestimmung durch Satellitennavigation für einen Nutzer und zusätzlich oder alternativ für eine Ausrüstung eines Nutzers zu ermöglichen. Das mobile Satellitenempfangsgerät kann als ein Zweifrequenz-Satellitenempfangsgerät oder Mehrfrequenz-Satellitenempfangsgerät ausgeführt sein. Das mobile Satellitenempfangsgerät kann in einem Fahrzeug angeordnet sein. In dem unbewegten Zustand des mobilen Satellitenempfangsgeräts kann das mobile Satellitenempfangsgerät stationär oder unbewegt relativ zu einem erdfesten Referenzpunkt angeordnet sein. Das Sensorsignal kann beispielsweise von einem Bewegungssensor bereitgestellt werden, so dass die Messgröße beispielsweise eine Beschleunigung sein kann.

Gemäß einer Ausführungsform kann das Verfahren einen Schritt des Bestimmens einer geografischen Position des mobilen Satellitenempfangsgeräts aufweisen. Hierbei kann im Schritt des Auswertens die geografische Position berücksichtigt werden, um Roh-Korrekturdaten zu erzeugen, die eine Information über atmosphärische Störungen bezogen auf die geografische Position repräsentieren. Eine solche Ausführungsform bietet den Vorteil, dass ein genauer Überblick über atmosphärische Störungen mit Ortsauflösung ermöglicht werden kann.

Dabei kann im Schritt des Bestimmens die geografische Position unter Verwendung des mindestens einen Satellitensignals, unter Verwendung zumindest eines weiteren Sensorsignals, das eine mit der geografischen Position des mobilen Satellitenempfangsgeräts korrelierbare weitere Messgröße repräsentiert, unter Verwendung eines Positionssignals, das eine geografische Position einer stationären Einrichtung repräsentiert, die mit einem das mobile Satellitenempfangsgerät aufweisenden System temporär gekoppelt ist, und zusätzlich oder alternativ unter Verwendung zumindest eines Bewegungssignals, das zumindest eine Bewegungsgröße repräsentiert, mittels derer ausgehend von einer vorherigen geografischen Position des mobilen Satellitenempfangsgeräts die geografische Position des mobilen Satellitenempfangsgeräts ermittelbar ist, bestimmt werden. Das weitere Sensorsignal kann von einem Radarsensor, einem Videosensor oder dergleichen bereitgestellt sein. Unter korrelierbar kann verstanden werden, dass die weitere Messgröße der geografischen Position zugeordnet werden kann oder dass die geografische Position aus der weiteren Messgröße bestimmt werden kann, beispielsweise unter Verwendung einer Zuordnungstabelle. Wenn die weitere Messgröße ein Bild darstellt, kann die geografischen Position beispielsweise basierend auf einem von dem Bild abgebildeten Objekt bestimmt werden, das der geografischen Position zugeordnet werden kann. Zusätzlich zu dem Sensorsignal können Kartendaten verwendet werden. Die stationäre Einrichtung kann eine Ladestation zum Aufladen eines Elektrofahrzeugs oder Hybridfahrzeugs sein. Das Bewegungssignal kann von einem Beschleunigungssensor oder dergleichen bereitgestellt sein. Eine solche Ausführungsform bietet den Vorteil, dass die geografische Position unter Verwendung zumindest eines jeweils geeigneten oder verfügbaren Sensorsignals zuverlässig und genau bestimmt werden kann. Eine Genauigkeit der Positionsbestimmung kann zudem verbessert werden, je länger sich das mobile Satellitenempfangsgerät in dem unbewegten Zustand befindet.

Ferner kann oder können der Schritt des Überprüfens und zusätzlich oder alternativ der Schritt des Auswertens wiederholt ausgeführt werden. Hierbei kann eine Wiederholungsfrequenz in Abhängigkeit von einem Energieversorgungszustand und zusätzlich oder alternativ in Abhängigkeit von einer geografischen Position des mobilen Satellitenempfangsgeräts eingestellt werden. Anders ausgedrückt kann oder können der Schritt des Überprüfens und zusätzlich oder alternativ der Schritt des Auswertens mit einer einstellbaren Wiederholungsfrequenz wiederholt ausgeführt werden. Eine solche Ausführungsform bietet den Vorteil, dass ein Betrieb des mobilen Satellitenempfangsgeräts als Referenzstation so angepasst werden kann, dass Energiereserven geschont werden können. Zusätzlich oder alternativ kann hinsichtlich der Wiederholungsfrequenz auch berücksichtigt werden, ob die geografische Position des mobilen Satellitenempfangsgeräts auf eine städtische Umgebung, eine ländliche Umgebung oder dergleichen hindeutet. In einer städtischen Umgebung kann eine Wiederholungsfrequenz gesenkt werden, da andere mobile Satellitenempfangsgeräte in der Nähe der geografischen Position bekannt sein oder vermutet werden können.

Gemäß einer Ausführungsform können im Schritt des Auswertens die Roh-Korrekturdaten unter Verwendung einer Signaleigenschaft des mindestens einen Satellitensignals erzeugt werden, die eine Signallaufzeit und zusätzlich oder alternativ eine Signallaufzeitänderung des mindestens einen Satellitensignals betrifft. Hierbei kann die Signaleigenschaft ein Ergebnis eines Vergleichs zumindest eines Signalwerts bezogen auf zumindest zwei Übertragungsfrequenzen des mindestens einen Satellitensignals repräsentieren. Eine solche Ausführungsform bietet den Vorteil, dass die Roh-Korrekturdaten zuverlässig und genau ermittelt werden können.

Es wird auch ein Verfahren zum Bestimmen von Korrekturdaten zur Korrektur atmosphärischer Störungen zur Satellitennavigation vorgestellt, wobei das Verfahren folgende Schritte aufweist:
Einlesen von gemäß einer Ausführungsform des vorstehend genannten Verfahrens bereitgestellten Roh-Korrekturdaten von einer Mehrzahl von in dem unbewegten Zustand befindlichen, mobilen Satellitenempfangsgeräten; und
Ermitteln der Korrekturdaten unter Verwendung der Roh-Korrekturdaten.

Das Verfahren zum Bestimmen kann in Verbindung mit einer Ausführungsform des vorstehend genannten Verfahrens zum Bereitstellen vorteilhaft ausgeführt werden. Hierbei können die durch Ausführen einer Ausführungsform des vorstehend genannten Verfahrens zum Bereitstellen bereitgestellten Roh-Korrekturdaten bei dem Verfahren zum Bestimmen verwendet werden. Die Korrekturdaten können verwendet werden, um eine Korrektur von Satellitensignalen im Hinblick auf Abweichungen, Störungen und zusätzlich oder alternativ einen aktuellen Zustand der Atmosphäre zu bewirken.

Gemäß einer Ausführungsform können im Schritt des Einlesens die Roh-Korrekturdaten von einer Mehrzahl von mobilen Satellitenempfangsgeräten eingelesen werden, von denen zumindest ein mobiles Satellitenempfangsgerät in einem Fahrzeug angeordnet ist. Optional kann zumindest ein mobiles Satellitenempfangsgerät der Mehrzahl von mobilen Satellitenempfangsgeräten ein fahrzeugunabhängiges mobiles Satellitenempfangsgerät sein. Eine solche Ausführungsform bietet den Vorteil, dass eine Mehrzahl von als Referenzstationen betreibbare, mobile Satellitenempfangsgeräte zur Datenerfassung genutzt werden können, sodass ein dichtes Netzwerk von Referenzstationen und somit eine sichere und exakte Bestimmung von Korrekturdaten ermöglicht werden können.

Auch können im Schritt des Ermittelns die Korrekturdaten unter Verwendung einer Mehrzahl von Referenz-Zustandssignalen, unter Verwendung eines Atmosphärenkorrekturmodells und zusätzlich oder alternativ unter Verwendung eines Modellalgorithmus ermittelt werden. Hierbei können die Referenz-Zustandssignale von stationären Referenz-Satellitenempfangsgeräten eingelesene Signale repräsentieren. Die Mehrzahl von Referenz-Satellitenempfangsgeräten können in einem regionalen, überregionalen und zusätzlich oder alternativ globalen Gitter oder Netzwerk angeordnet sein. Eine solche Ausführungsform bietet den Vorteil, dass eine Genauigkeit von Korrekturen hinsichtlich atmosphärischer Störungen weiter erhöht und somit eine Satellitennavigation weiter verbessert werden kann.

Ferner kann das Verfahren einen Schritt des Ausgebens der Korrekturdaten an die Mehrzahl von mobilen Satellitenempfangsgeräten aufweisen. Hierbei können die Korrekturdaten für eine Korrektur eines Übertragens des mindestens einen Satellitensignals zwischen dem zumindest einen Satelliten und der Mehrzahl von mobilen Satellitenempfangsgeräten verwendbar sein. Eine solche Ausführungsform bietet den Vorteil, dass eine Genauigkeit einer Positionsbestimmung durch die mobilen Satellitenempfangsgeräte sowohl für einen Betrieb zur Satellitennavigation als auch für einen Betrieb als Referenzstation verbessert werden kann.

Der hier vorgestellte Ansatz schafft ferner eine Vorrichtung, die ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form einer Vorrichtung kann die der Erfindung zugrunde liegende Aufgabe schnell und effizient gelöst werden.

Hierzu kann die Vorrichtung zumindest eine Recheneinheit zum Verarbeiten von Signalen oder Daten, zumindest eine Speichereinheit zum Speichern von Signalen oder Daten, zumindest eine Schnittstelle zu einem Sensor oder einem Aktor zum Einlesen von Sensorsignalen von dem Sensor oder zum Ausgeben von Daten- oder Steuersignalen an den Aktor und/oder zumindest eine Kommunikationsschnittstelle zum Einlesen oder Ausgeben von Daten aufweisen, die in ein Kommunikationsprotokoll eingebettet sind. Die Recheneinheit kann beispielsweise ein Signalprozessor, ein Mikrocontroller oder dergleichen sein, wobei die Speichereinheit ein Flash-Speicher, ein EEPROM oder eine magnetische Speichereinheit sein kann. Die Kommunikationsschnittstelle kann ausgebildet sein, um Daten drahtlos und/oder leitungsgebunden einzulesen oder auszugeben, wobei eine Kommunikationsschnittstelle, die leitungsgebundene Daten einlesen oder ausgeben kann, diese Daten beispielsweise elektrisch oder optisch aus einer entsprechenden Datenübertragungsleitung einlesen oder in eine entsprechende Datenübertragungsleitung ausgeben kann.

Unter einer Vorrichtung kann vorliegend ein elektrisches Gerät verstanden werden, das Sensorsignale verarbeitet und in Abhängigkeit davon Steuer- und/oder Datensignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

In einer vorteilhaften Ausgestaltung kann die Vorrichtung als ein Teil eines mobilen Satellitenempfangsgeräts oder einer mit dem mobilen Satellitenempfangsgerät verbundenen Einrichtung und optional zusätzlich als ein Teil einer Datenverarbeitungsseinsrichtung eines Korrekturdienstes ausgeführt sein. Hierbei erfolgt durch die Vorrichtung eine Steuerung zumindest eines mobilen Satellitenempfangsgeräts zur Sammlung von Roh-Korrekturdaten und zusätzlich oder alternativ zur satellitengestützten Navigation unter Verwendung von Korrekturdaten. Hierzu kann die Vorrichtung beispielsweise auf Satellitensignale, Sensorsignale, wie beispielsweise Radarsignale, Videosignale, Beschleunigungssignale und dergleichen, Positionssignale, Bewegungssignale und dergleichen zugreifen. Die Ansteuerung erfolgt über Signalübertragungseinrichtungen wie Sendegeräte, Sende-Empfangsgeräte und Antennen.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte eines Verfahrens nach einer der vorstehend beschriebenen Ausführungsformen verwendet wird, insbesondere wenn das Programmprodukt oder Programm auf einem Computer oder einer Vorrichtung ausgeführt wird.

Ausführungsbeispiele des hier vorgestellten Ansatzes sind in den Zeichnungen dargestellt und in der nachfolgenden Beschreibung näher erläutert. Es zeigt:
Fig. 1 eine schematische Darstellung eines Systems zur Satellitennavigation gemäß einem Ausführungsbeispiel;
Fig. 2 eine schematische Darstellung von Teilen des Systems aus Fig. 1;
Fig. 3 ein Ablaufdiagramm eines Verfahrens zum Bereitstellen gemäß einem Ausführungsbeispiel; und
Fig. 4 ein Ablaufdiagramm eines Verfahrens zum Bestimmen gemäß einem Ausführungsbeispiel.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

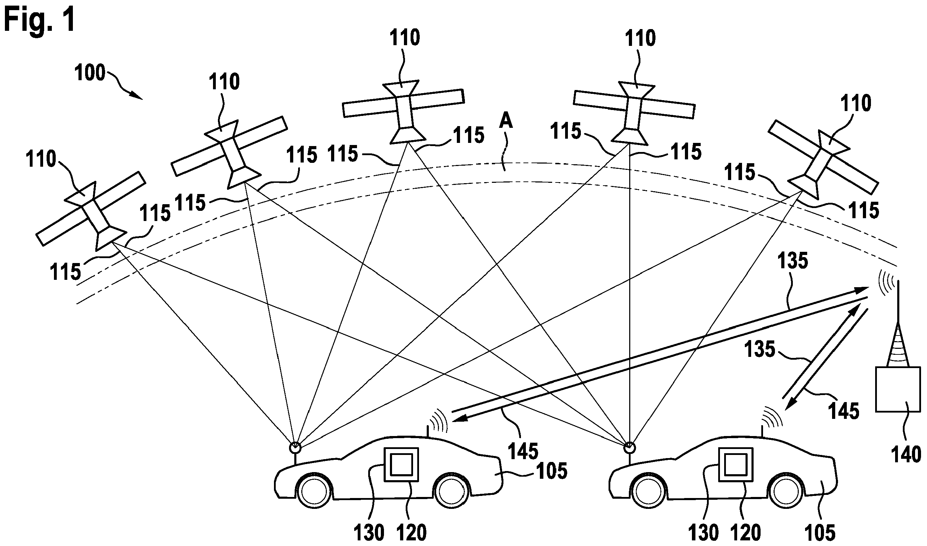

Fig. 1 zeigt eine schematische Darstellung eines Systems 100 zur Satellitennavigation gemäß einem Ausführungsbeispiel. Das System 100 weist gemäß dem in Fig. 1 dargestellten Ausführungsbeispiel eine Mehrzahl von Satelliten 110, hier lediglich beispielhaft fünf Satelliten 110, beispielhaft lediglich zwei mobile Satellitenempfangsgeräte 120, von denen jedes in einem eigenen Fahrzeug 105 angeordnet ist, beispielhaft lediglich zwei Bereitstellungsvorrichtungen 130, von denen jede als ein Teil der Satellitenempfangsgeräte 120 ausgeführt ist, und eine Bestimmungsvorrichtung 140 auf, die entfernt von den Fahrzeugen 105 mit den Satellitenempfangsgeräten 120 und Bereitstellungsvorrichtungen 130 angeordnet ist. Ferner ist zwischen den Satelliten 110 einerseits und den Fahrzeugen 105 mit den Satellitenempfangsgeräten 120 und Bereitstellungsvorrichtungen 130 andererseits schematisch die Atmosphäre A der Erde gezeigt, insbesondere die Ionosphäre. In der Atmosphäre A können Störungen auftreten.

Jedes der mobilen Satellitenempfangsgeräte 120, und somit jede der Bereitstellungsvorrichtungen 130, ist signalübertragungsfähig mit den Satelliten 110 verbunden. Zwischen den Satelliten 110 und den mobilen Satellitenempfangsgeräten 120 werden Satellitensignale 115 übertragen. Die Fahrzeuge 105, in denen die mobilen Satellitenempfangsgeräte 120 mit den Bereitstellungsvorrichtungen 130 angeordnet sind, befinden sich in der Darstellung von Fig. 1 in einem geparkten Zustand. Somit befinden sich die mobilen Satellitenempfangsgeräte 120 in einem unbewegten bzw. stationären Zustand. Jedes der mobilen Satellitenempfangsgeräte 120, und somit jede der Bereitstellungsvorrichtungen 130, ist signalübertragungsfähig mit der Bestimmungsvorrichtung 140 verbunden.

Jede der Bereitstellungsvorrichtungen 130 ist ausgebildet, um unter Verwendung der Satellitensignale 115 zur Korrektur atmosphärischer Störungen zur Satellitennavigation Roh-Korrekturdaten 135 bereitzustellen. Die Roh-Korrekturdaten 135 repräsentieren eine Information über die atmosphärischen Störungen. Die Bestimmungsvorrichtung 140 ist ausgebildet, um unter Verwendung der Roh-Korrekturdaten 135 dann Korrekturdaten 145 zur Korrektur atmosphärischer Störungen zur Satellitennavigation zu bestimmen. Die Korrekturdaten 145 sind für eine Korrektur eines durch atmosphärische Störungen beeinträchtigten Übertragens des mindestens einen Satellitensignals 115 zwischen dem zumindest einen Satelliten 110 und der Mehrzahl von mobilen Satellitenempfangsgeräten 120 verwendbar.

Es werden zwischen den Bereitstellungsvorrichtungen 130 und der Bestimmungsvorrichtung 140 somit Signale übertragen, welche die Roh-Korrekturdaten 135 und die Korrekturdaten 145 repräsentieren. Dabei werden die Roh-Korrekturdaten 135 von den Bereitstellungsvorrichtungen 130 an die Bestimmungsvorrichtung 140 übertragen. Die Korrekturdaten 145 werden von der Bestimmungsvorrichtung 140 an die Bereitstellungsvorrichtungen 130 übertragen.

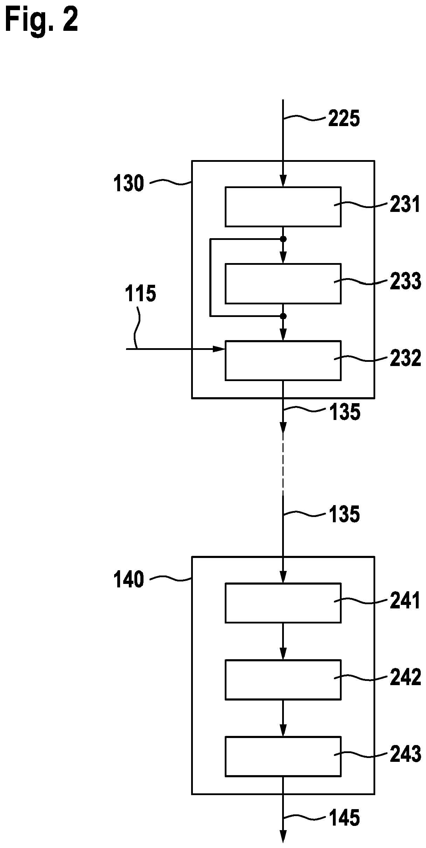

Unter anderem auf die Bereitstellungsvorrichtungen 130 und auf die Bestimmungsvorrichtung 140 wird nachfolgend unter Bezugnahme auf Fig. 2 noch detaillierter eingegangen.

Fig. 2 zeigt eine schematische Darstellung von Teilen des Systems aus Fig. 1. Von dem System aus Fig. 1 sind hierbei eine Bereitstellungsvorrichtung 130 der Bereitstellungsvorrichtungen und die Bestimmungsvorrichtung 140 dargestellt.

Die Bereitstellungsvorrichtung 130 weist eine Überprüfungseinrichtung 231 und eine Auswerteeinrichtung 232 auf. Die Überprüfungseinrichtung 231 ist ausgebildet, um unter Verwendung zumindest eines Sensorsignals 225 zu überprüfen, ob ein mobiles Satellitenempfangsgerät zur Satellitennavigation sich in einem unbewegten Zustand befindet, also beispielsweise still steht. Dabei ist die Überprüfungseinrichtung 231 und/oder die Bereitstellungsvorrichtung 130 ausgebildet, um das zumindest eine Sensorsignal 225 zu empfangen oder einzulesen. Das Sensorsignal 225 repräsentiert eine von einem Bewegungszustand des mobilen Satellitenempfangsgeräts abhängige Messgröße, beispielsweise eine Beschleunigung, Geschwindigkeit oder Positionsänderung. Ferner ist die Überprüfungseinrichtung 231 ausgebildet, um ein Überprüfungsergebnis direkt oder indirekt an die Auswerteeinrichtung 232 weiterzuleiten.

Die Auswerteeinrichtung 232 ist ausgebildet, um mindestens ein Satellitensignal 115, das zwischen dem zumindest einen Satelliten und dem mobilen Satellitenempfangsgerät übertragen wird, während sich das mobile Satellitenempfangsgerät in dem unbewegten Zustand befindet, hinsichtlich einer von atmosphärischen Störungen abhängigen Signaleigenschaft auszuwerten, um die Roh-Korrekturdaten 135 zu erzeugen. Die Bereitstellungsvorrichtung 130 ist ausgebildet, um die Roh-Korrekturdaten 135 zur Ausgabe an die Bestimmungsvorrichtung 140 bereitzustellen.

Gemäß dem hier dargestellten Ausführungsbeispiel weist die Bereitstellungsvorrichtung 130 ferner eine Bestimmungseinrichtung 233 auf. Die Bestimmungseinrichtung 233 ist ausgebildet, um eine geografische Position des mobilen Satellitenempfangsgeräts zu bestimmen. Dabei ist die Auswerteeinrichtung 232 ausgebildet, um die geografische Position zu berücksichtigen, um Roh-Korrekturdaten 135 zu erzeugen, die eine Information über atmosphärische Störungen bezogen auf die geografische Position repräsentieren.

Die Bestimmungsvorrichtung 140 weist eine Einleseeinrichtung 241 und eine Ermittlungseinrichtung 242 auf. Die Einleseeinrichtung 241 ist ausgebildet, um die von der Bereitstellungsvorrichtung 130 bereitgestellten Roh-Korrekturdaten 135 einzulesen. Genauer gesagt ist die Einleseeinrichtung 241 ausgebildet, um Roh-Korrekturdaten 135 von einer Mehrzahl von Bestimmungsvorrichtungen 130 einzulesen, die in einer Mehrzahl von in dem unbewegten Zustand befindlichen, mobilen Satellitenempfangsgeräten angeordnet sind. Ferner ist die Einleseeinrichtung 241 ausgebildet, die eingelesenen Roh-Korrekturdaten 135 an die Ermittlungseinrichtung 242 weiterzuleiten. Die Ermittlungseinrichtung 242 ist ausgebildet, um unter Verwendung der Roh-Korrekturdaten 135 die Korrekturdaten 145 zu ermitteln.

Gemäß dem hier dargestellten Ausführungsbeispiel weist die Bestimmungsvorrichtung 140 auch eine Ausgabeeinrichtung 243 zum Ausgeben der Korrekturdaten 145 an eine Mehrzahl von mobilen Satellitenempfangsgeräten auf. Alternativ kann die Bestimmungsvorrichtung 140 ausgebildet sein, um die Korrekturdaten 145 an die Mehrzahl von mobilen Satellitenempfangsgeräten auszugeben.

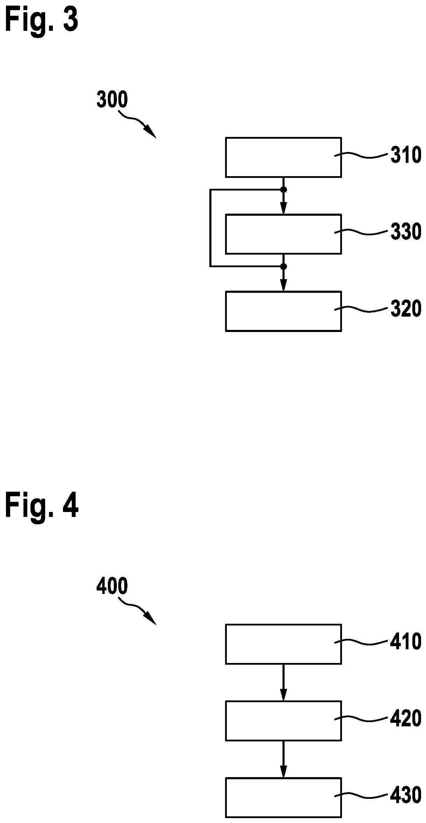

Fig. 3 zeigt ein Ablaufdiagramm eines Verfahrens 300 zum Bereitstellen gemäß einem Ausführungsbeispiel. Das Verfahren 300 zum Bereitstellen ist ausführbar, um Roh-Korrekturdaten zur Korrektur atmosphärischer Störungen zur Satellitennavigation bereitzustellen. Dabei ist das Verfahren 300 zum Bereitstellen mittels einer Bereitstellungsvorrichtung aus einer der vorstehend beschriebenen Figuren oder einer ähnlichen Vorrichtung ausführbar.

In einem Schritt 310 des Überprüfens dem Verfahren 300 unter Verwendung zumindest eines Sensorsignals überprüft, ob ein mobiles Satellitenempfangsgerät zur Satellitennavigation sich in einem unbewegten Zustand befindet. Das Sensorsignal repräsentiert eine von einem Bewegungszustand des mobilen Satellitenempfangsgeräts abhängige Messgröße. Nachfolgend wird in einem Schritt 320 des Auswertens mindestens ein zwischen zumindest einem Satelliten und dem mobilen Satellitenempfangsgerät in dem unbewegten Zustand übertragenes Satellitensignal hinsichtlich einer von atmosphärischen Störungen abhängigen Signaleigenschaft ausgewertet, um die Roh-Korrekturdaten zu erzeugen. Die Roh-Korrekturdaten repräsentieren eine Information über die atmosphärischen Störungen. Anders ausgedrückt werden in dem Schritt 320 des Auswertens lediglich Satellitensignale ausgewertet, die in dem unbewegten Zustand zumindest eines mobilen Satellitenempfangsgeräts zwischen demselben und zumindest einem Satelliten übertragen werden.

Gemäß dem in Fig. 3 dargestellten Ausführungsbeispiel weist das Verfahren 300 zum Bereitstellen auch einen Schritt 330 des Bestimmens auf. In dem Schritt 330 des Bestimmens wird eine geografische Position des mobilen Satellitenempfangsgeräts bestimmt. Nachfolgend wird im Schritt 320 des Auswertens die im Schritt 330 des Bestimmens bestimmte geografische Position berücksichtigt, um Roh-Korrekturdaten zu erzeugen, die eine Information über atmosphärische Störungen bezogen auf die geografische Position repräsentieren. Insbesondere wird gemäß einem Ausführungsbeispiel im Schritt 330 des Bestimmens die geografische Position unter Verwendung des mindestens einen Satellitensignals bestimmt. Zusätzlich oder alternativ wird gemäß einem Ausführungsbeispiel im Schritt 330 des Bestimmens die geografische Position unter Verwendung zumindest eines weiteren Sensorsignals bestimmt. Das weitere Sensorsignal stellt eine mit der geografischen Position des mobilen Satellitenempfangsgeräts korrelierbare weitere Messgröße dar. Beispielsweise kann der weiteren Messgröße eine Information über die geografische Position entnommen werden oder die geografischen Position kann durch Auswerten der weiteren Messgröße bestimmt werden. Zusätzlich oder alternativ wird gemäß einem Ausführungsbeispiel im Schritt 330 des Bestimmens die geografische Position unter Verwendung eines Positionssignals bestimmt, das eine geografische Position einer stationären Einrichtung repräsentiert, die mit einem das mobile Satellitenempfangsgerät aufweisenden System temporär gekoppelt ist. Zusätzlich oder alternativ wird gemäß einem Ausführungsbeispiel im Schritt 330 des Bestimmens die geografische Position unter Verwendung zumindest eines Bewegungssignals bestimmt, das zumindest eine Bewegungsgröße repräsentiert, mittels derer ausgehend von einer vorherigen geografischen Position des mobilen Satellitenempfangsgeräts die geografische Position des mobilen Satellitenempfangsgeräts ermittelbar ist. Insbesondere auf die Art und Weise, nach der die geografische Position in dem Schritt 330 des Bestimmens bestimmt wird, soll nachfolgend noch detaillierter eingegangen werden.

Gemäß einem Ausführungsbeispiel wird oder werden der Schritt 310 des Überprüfens und/oder der Schritt 320 des Auswertens wiederholt ausgeführt. Hierbei wird eine Wiederholungsfrequenz einer wiederholten Ausführung des Schrittes des Überprüfens und/oder des Schrittes des Auswertens in Abhängigkeit davon eingestellt, wie ein Energieversorgungszustand des mobilen Satellitenempfangsgeräts ist und/oder an welcher geografischen Position das mobile Satellitenempfangsgerät in dem stationären Zustand angeordnet ist.

Gemäß einem weiteren Ausführungsbeispiel werden im Schritt 320 des Auswertens die Roh-Korrekturdaten unter Verwendung einer Signaleigenschaft des mindestens einen Satellitensignals erzeugt, die eine Signallaufzeit und/oder Signallaufzeitänderung des mindestens einen Satellitensignals betrifft. Dabei repräsentiert die Signaleigenschaft ein Ergebnis eines Vergleichs zumindest eines Signalwerts bezogen auf zumindest zwei Übertragungsfrequenzen des mindestens einen Satellitensignals. Hierbei kann das zumindest eine mobile Satellitenempfangsgerät als ein Zweifrequenz-Satellitenempfangsgerät oder dergleichen ausgeführt sein.

Fig. 4 zeigt ein Ablaufdiagramm eines Verfahrens 400 zum Bestimmen gemäß einem Ausführungsbeispiel. Das Verfahren 400 zum Bestimmen ist ausführbar, um Korrekturdaten zur Korrektur atmosphärischer Störungen zur Satellitennavigation zu bestimmen. Das Verfahren 400 zum Bestimmen ist in Verbindung mit dem Verfahren zum Bereitstellen aus Fig. 3 oder einem ähnlichen Verfahren ausführbar. Auch ist das Verfahren 400 zum Bestimmen mittels der Bestimmungsvorrichtung aus Fig. 1 bzw. Fig. 2 oder einer ähnlichen Bestimmungsvorrichtung ausführbar.

In einem Schritt 410 des Einlesens werden bei dem Verfahren 400 zum Bestimmen Roh-Korrekturdaten, die gemäß dem Verfahren zum Bereitstellen aus Fig. 3 oder einem ähnlichen Verfahren bereitgestellt sind, von einer Mehrzahl von in dem unbewegten Zustand befindlichen, mobilen Satellitenempfangsgeräten eingelesen. Nachfolgend werden in einem Schritt 420 des Ermittelns unter Verwendung der in dem Schritt 410 des Einlesens eingelesenen Roh-Korrekturdaten die Korrekturdaten ermittelt.

Gemäß dem in Fig. 4 dargestellten Ausführungsbeispiel weist das Verfahren 400 zum Bestimmen auch einen Schritt 430 des Ausgebens der im Schritt 420 des Ermittelns ermittelten Korrekturdaten an die Mehrzahl von mobilen Satellitenempfangsgeräten auf. Die Korrekturdaten sind hierbei für eine Korrektur eines Übertragens des mindestens einen Satellitensignals zwischen dem zumindest einen Satelliten und der Mehrzahl von mobilen Satellitenempfangsgeräten verwendbar.

Gemäß einem Ausführungsbeispiel, wie es auch in Fig. 1 in zumindest ähnlicher Weise gezeigt ist, werden im Schritt 410 des Einlesens die Roh-Korrekturdaten von einer Mehrzahl von mobilen Satellitenempfangsgeräten eingelesen, von denen zumindest ein mobiles Satellitenempfangsgerät in einem Fahrzeug angeordnet ist. Gemäß einem weiteren Ausführungsbeispiel werden die Korrekturdaten im Schritt 420 des Ermittelns unter Verwendung einer Mehrzahl von Referenz-Zustandssignalen, unter Verwendung eines Atmosphärenkorrekturmodells und/oder unter Verwendung eines Modellalgorithmus ermittelt. Dabei repräsentieren die Referenz-Zustandssignale von stationären Referenz-Satellitenempfangsgeräten eingelesene Signale.

Unter Bezugnahme auf die vorstehend beschriebenen Figuren werden nachfolgend Ausführungsbeispiele sowie Vorteile von Ausführungsbeispielen mit anderen Worten zusammenfassend nochmals kurz erläutert und/oder vorgestellt.

Jedes mobile Satellitenempfangsgerät 120 bzw. Navigationsendgerät 120 bzw. jeder sogenannte Positioning Sensor empfängt kontinuierlich Navigationsdaten der Navigationssatelliten in Gestalt der Satellitensignale 115. Wenn durch das Sensorsignal 225 von einem oder mehreren Sensoren, z. B. Beschleunigungssensor, Gyroskop, Magnetfeldsensor, ein stationärer Zustand des Navigationsendgerätes 120 erkannt wird, kann in einen Betriebsmodus als Referenzstation umgeschaltet werden. Die Satellitensignale 115 werden ausgewertet, solange sichergestellt ist, dass sich das Navigationsendgerät 120 nicht bewegt.

Zur Informationsgewinnung für ein Korrektursignal bzw. die Korrekturdaten 145 können beispielsweise nachfolgend beschriebene Methoden und Varianten zum Einsatz kommen.

Bei einer Methode wird das Navigationsendgerät 120 anhand der durch andere Positionsbestimmungsverfahren ermittelten geografischen Position, z. B. Lokalisierung durch Radar- und Videosensoren unter Verwendung einer entsprechenden Karte, ähnlich einer herkömmlichen fest stehenden Referenzstation verwendet, solange sich das Navigationsgerät 120 in dem stationären Zustand befindet. Diese Methode ist beispielsweise für ein Fahrzeug für hochautomatisiertes Fahren geeignet, welches über eine genaue Positionsbestimmung durch Radar, Video oder dergleichen verfügt. Das Navigationsendgerät 120 und somit das Fahrzeug 105 wird als Referenzstation verwendet, solange es beispielsweise geparkt ist. Die durch Auswertung der Satellitensignale 115 gewonnenen Informationen, beispielsweise über Laufzeitänderungen in der Ionosphäre und Troposphäre werden an die Bestimmungsvorrichtung 140 bzw. einen Server oder eine Datenwolke bzw. Cloud übertragen. Durch einen Abgleich der Roh-Korrekturdaten 135 von nahe beieinander befindlichen Fahrzeugen bzw. Navigationsendgeräten 120 mittels der Bestimmungsvorrichtung 140 kann eine Genauigkeit weiter erhöht werden. Die Korrekturdaten 145 werden mittels der Bestimmungsvorrichtung 140 erzeugt und dann wiederum insbesondere sich bewegenden Navigationsendgeräten 120 zur Verfügung gestellt.

Bei einer weiteren Methode ist eine geografische Position des Navigationsendgerätes 120 bekannt. Dies ist z. B. der Fall, wenn sich ein Fahrzeug 105 an einer Ladestation für elektrische Fahrzeuge befindet. Der Standort einer Ladestation, insbesondere einer öffentlichen Ladestation ist bekannt. Aufgrund einer Abrechnung verbrauchten Stroms ist auch bekannt, welches Fahrzeug 105 sich an welcher Ladestation befindet. Bei kabelgebundenen Ladestationen ist eine gewisse Ungenauigkeit möglich, doch durch eine Vielzahl von Referenzstationen in unmittelbarer Nähe kann eine Ungenauigkeit ausgeglichen werden. Eine Genauigkeit einer Positionsbestimmung ist beispielsweise bei induktiven Ladestationen höher. Mit der bekannten geografischen Position des Fahrzeugs 105 ist die Verwendung des Fahrzeugs 105 als Referenzstation analog zu herkömmlichen Referenzstationen möglich.

Bei einer weiteren Methode ist eine geografische Position des Navigationsendgerätes 120 zunächst ungenau bekannt oder unbekannt, aber durch weitere Sensoren, z. B. Beschleunigungssensor, Magnetfeld, Gyroskop oder dergleichen, kann überprüft werden, dass sich das Navigationsendgerät 120 in dem unbewegten Zustand befindet. Das Navigationsendgerät 120 bzw. die Bereitstellungsvorrichtung 130 empfängt, beispielsweise fortlaufend, die Satellitensignale 115 bzw. Satellitendaten und es wird eine hypothetische Position des Navigationsendgerätes 120 bestimmt, insbesondere in Gestalt einer berechneten durchschnittlichen Position seit einer letzten Bewegung. Unter Verwendung der hypothetischen Position kann aufgrund auftretender Laufzeitänderungen wiederum ein Korrektursignal mit Korrekturdaten 145 bestimmt werden. Die hypothetische Position wird immer genauer, je länger das Navigationsendgerät 120 sich in dem unbewegten Zustand befindet. Durch Verarbeitung der Roh-Korrekturdaten 135 von vielen Navigationsendgeräten 120 in unmittelbarer Nähe können die Korrekturdaten 145 serverseitig nochmals aufgebessert werden.

Gemäß einem Ausführungsbeispiel werden kurzfristige Laufzeitänderungen an die Bestimmungsvorrichtung 140 übertragen. Durch eine Analyse der kurzfristigen Laufzeitänderungen mittels der Bestimmungsvorrichtung 140 und einen Vergleich von Laufzeitänderungen von lokal benachbarten Navigationsendgeräten 120 lässt sich eine durch Ionosphäre und Troposphäre verursachte Laufzeitänderung ermitteln und lassen sich die Korrekturdaten 145 bestimmen.

Allgemein gesagt gilt insbesondere, auch hinsichtlich der vorstehend genannten Methoden und Varianten, dass diese beliebig innerhalb eines Navigationsendgerätes 120 oder im Gesamtsystem kombiniert werden können, um eine Genauigkeit zu erhöhen. Beispielsweise übertragen Mobiltelefone nach einer der beiden letztgenannten Methoden und stellen Fahrzeuge 105 gewonnene Informationen nach einer der beiden erstgenannten Methoden zur Verfügung. Eine weitere Erhöhung der Genauigkeit kann durch eine Ergänzung mit fest installierten Referenzstationen erzielt werden, die Laufzeitänderungen in der Ionosphäre in einem größeren geografischen Kontext ermitteln können.

Um angesichts eines Energieverbrauchs des Navigationsendgeräts 120 und einer zugehörigen Kommunikationseinheit beispielsweise eine Batterieversorgung zu schonen, sodass z. B. ein Fahrzeug stets sicher starten kann, können verschiedene Strategien zum Einsatz kommen. Beispielsweise kann der Betrieb als Referenzstation bzw. die Funktion zur Ermittlung der Daten abgeschaltet werden, wenn eine vordefinierte Batteriespannung unterschritten wird. Wenn das Fahrzeug 105 jedoch an einer Ladesäule angeschlossen ist, kann solange zumindest ein Betrieb als Referenzstation erfolgen.

Um ein ausreichend genaues Korrektursignal für eine Region zu erreichen, kann die Bestimmungsvorrichtung 140 auch eine Häufigkeit einer Datenübertragung beeinflussen, beispielsweise in Abhängigkeit von einer geografischen Position der Fahrzeuge 105 mit den Navigationsendgeräten 120. Es kann veranlasst werden, dass in Ballungsgebieten die Roh-Korrekturdaten 135 weniger oft übertragen werden, da dort mehr Fahrzeuge mit Navigationsendgeräten 120 zur Verfügung stehen. In ländlichen Regionen kann eine häufigere Übertragung der Roh-Korrekturdaten 135 bewirkt werden.

Insbesondere werden die Roh-Korrekturdaten 135 aus den einzelnen Navigationsendgeräten 120 beispielsweise über eine Telematikeinheit an die Bestimmungsvorrichtung 140 übertragen und dort die Korrekturdaten 145 für ein definiertes geografisches Gebiet ermittelt. Die Korrekturdaten 145 werden dann wiederum über eine Funkübertragung, z. B. Mobilfunknetz oder Satellit, an die Navigationsendgeräte 120 übertragen.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Verfahren (300) zum Bereitstellen von Roh-Korrekturdaten (135) zur Korrektur atmosphärischer Störungen zur Satellitennavigation, wobei das Verfahren (300) folgende Schritte aufweist:
Überprüfen (310), ob ein mobiles Satellitenempfangsgerät (120) zur Satellitennavigation sich in einem unbewegten Zustand befindet, unter Verwendung zumindest eines Sensorsignals (225), wobei das Sensorsignal (225) eine von einem Bewegungszustand des mobilen Satellitenempfangsgeräts (120) abhängige Messgröße repräsentiert; und
Auswerten (320) mindestens eines zwischen zumindest einem Satelliten (110) und dem mobilen Satellitenempfangsgerät (120) in dem unbewegten Zustand übertragenen Satellitensignals (115) hinsichtlich einer von atmosphärischen Störungen abhängigen Signaleigenschaft, um die Roh-Korrekturdaten (135) zu erzeugen, wobei die Roh-Korrekturdaten (135) eine Information über die atmosphärischen Störungen repräsentieren.

2. Verfahren (300) gemäß Anspruch 1, mit einem Schritt (330) des Bestimmens einer geografischen Position des mobilen Satellitenempfangsgeräts (120), wobei im Schritt (320) des Auswertens die geografische Position berücksichtigt wird, um Roh-Korrekturdaten (135) zu erzeugen, die eine Information über atmosphärische Störungen bezogen auf die geografische Position repräsentieren.

3. Verfahren (300) gemäß Anspruch 2, bei dem im Schritt (330) des Bestimmens die geografische Position unter Verwendung des mindestens einen Satellitensignals (115), unter Verwendung zumindest eines weiteren Sensorsignals, das eine mit der geografischen Position des mobilen Satellitenempfangsgeräts (120) korrelierbare weitere Messgröße repräsentiert, unter Verwendung eines Positionssignals, das eine geografische Position einer stationären Einrichtung repräsentiert, die mit einem das mobile Satellitenempfangsgerät (120) aufweisenden System (105) temporär gekoppelt ist, und/oder unter Verwendung zumindest eines Bewegungssignals, das zumindest eine Bewegungsgröße repräsentiert, mittels derer ausgehend von einer vorherigen geografischen Position des mobilen Satellitenempfangsgeräts (120) die geografische Position des mobilen Satellitenempfangsgeräts ermittelbar ist, bestimmt wird.

4. Verfahren (300) gemäß einem der vorangegangenen Ansprüche, bei dem der Schritt (310) des Überprüfens und/oder der Schritt (320) des Auswertens wiederholt ausgeführt wird oder werden, wobei eine Wiederholungsfrequenz in Abhängigkeit von einem Energieversorgungszustand und/oder von einer geografischen Position des mobilen Satellitenempfangsgeräts (120) eingestellt wird.

5. Verfahren (300) gemäß einem der vorangegangenen Ansprüche, bei dem im Schritt (320) des Auswertens die Roh-Korrekturdaten (135) unter Verwendung einer Signaleigenschaft des mindestens einen Satellitensignals (115) erzeugt werden, die eine Signallaufzeit und/oder Signallaufzeitänderung des mindestens einen Satellitensignals (115) betrifft, wobei die Signaleigenschaft ein Ergebnis eines Vergleichs zumindest eines Signalwerts bezogen auf zumindest zwei Übertragungsfrequenzen des mindestens einen Satellitensignals (115) repräsentiert.

6. Verfahren (400) zum Bestimmen von Korrekturdaten (145) zur Korrektur atmosphärischer Störungen zur Satellitennavigation, wobei das Verfahren (400) folgende Schritte aufweist:
Einlesen (410) von gemäß dem Verfahren (300) nach einem der vorangegangenen Ansprüche bereitgestellten Roh-Korrekturdaten (135) von einer Mehrzahl von in dem unbewegten Zustand befindlichen, mobilen Satellitenempfangsgeräten (120); und
Ermitteln (420) der Korrekturdaten (145) unter Verwendung der Roh-Korrekturdaten (135).

7. Verfahren (400) gemäß Anspruch 6, bei dem im Schritt (410) des Einlesens die Roh-Korrekturdaten (135) von einer Mehrzahl von mobilen Satellitenempfangsgeräten (120) eingelesen werden, von denen zumindest ein mobiles Satellitenempfangsgerät (120) in einem Fahrzeug (105) angeordnet ist.

8. Verfahren (400) gemäß einem der Ansprüche 6 bis 7, bei dem im Schritt (420) des Ermittelns die Korrekturdaten (145) unter Verwendung einer Mehrzahl von Referenz-Zustandssignalen, unter Verwendung eines Atmosphärenkorrekturmodells und/oder unter Verwendung eines Modellalgorithmus ermittelt werden, wobei die Referenz-Zustandssignale von stationären Referenz-Satellitenempfangsgeräten eingelesene Signale repräsentieren.

9. Verfahren (400) gemäß einem der Ansprüche 6 bis 8, mit einem Schritt (430) des Ausgebens der Korrekturdaten (145) an die Mehrzahl von mobilen Satellitenempfangsgeräten (120), wobei die Korrekturdaten (145) für eine Korrektur eines Übertragens des mindestens einen Satellitensignals (115) zwischen dem zumindest einen Satelliten (110) und der Mehrzahl von mobilen Satellitenempfangsgeräten (120) verwendbar sind.

10. Vorrichtung (130; 140), die eingerichtet ist, um Schritte eines Verfahrens (300; 400) gemäß einem der vorangegangenen Ansprüche in entsprechenden Einheiten auszuführen und/oder anzusteuern.

11. Computerprogramm, das dazu eingerichtet ist, ein Verfahren (300; 400) gemäß einem der vorangegangenen Ansprüche auszuführen und/oder anzusteuern.

12. Maschinenlesbares Speichermedium, auf dem das Computerprogramm nach Anspruch 11 gespeichert ist.
